# EUROPÄISCHE PATENTSCHRIFT

(11) **EP 3 468 428 B1**
(45) Veröffentlichungstag und Bekanntmachung des Hinweises auf die Patenterteilung: **10.07.2024**
(21) Anmeldenummer: 17732337.5
(22) Anmeldetag: 07.06.2017
(51) Int. Cl.: A47J 36/02, B05D 5/08, B41M 5/26, C08K 3/34

(54) **VERFAHREN ZUR HERSTELLUNG EINER LASERMARKIERTEN BESCHICHTUNG**
METHOD FOR PRODUCING A LASER-MARKED COATING
PROCÉDÉ DE FABRICATION D'UN REVÊTEMENT MARQUÉ AU LASER

(30) Priorität: 08.06.2016 DE 102016210160
(43) Veröffentlichungstag der Anmeldung: 17.04.2019
(73) Patentinhaber: Weilburger Coatings GmbH, 35781 Weilburg (DE)
(72) Erfinder: KRÄMER-LANG, Simone, 56479 Oberrod (DE); PFEIFER, Fred-Michael, 35619 Braunfels (DE); RENZ, Alexander, 35792 Löhnberg (DE)
(74) Vertreter: Patentanwälte Bressel und Partner mbB
(86) Internationale Anmeldenummer: PCT/EP2017/063842
(87) Internationale Veröffentlichungsnummer: WO 2017/211888

(56) Entgegenhaltungen:
- EP-A1- 2 578 323
- CH-A2- 709 779
- DE-A1- 102013 101 096
- GB-A- 2 169 282
- JP-A- H08 215 865

## Beschreibung

Die vorliegende Erfindung betrifft verschiedene Verfahren zur Herstellung einer lasermarkierten Beschichtung auf einer Oberfläche oder einem Teil einer Oberfläche eines Gegenstandes, gemäß der Verfahren erhältliche Beschichtungen, die eine Lasermarkierung aufweisen, und einen Gegenstand, der eine solche Beschichtung aufweist.

Vielfach ist es gewünscht, antihaftbeschichtetes Kochgeschirr, z.B. eine Pfanne, auch innen, mit einer Dekoration, einer Schrift oder einem Firmenlogo zu versehen.

Das Aufbringen von Dekoren, Schriften oder Markierungen auf antihaftbeschichteten Oberflächen wirft aufgrund eben dieser Antihaftwirkung sowie der in der Regel notwendigen Eignung für direkten Lebensmittelkontakt erhebliche Probleme auf.

Um dies zu umgehen, erfolgt die Dekoration in der Regel direkt innerhalb des Beschichtungs-prozesses durch Siebdrucken oder das Tampoprintverfahren. Dies hat erhebliche Nachteile im Ablauf, da die zu bedruckende Schicht schon trocken und mechanisch fest genug für die Bedruckung sein muss. Dies verlangsamt und verteuert den Herstellprozess deutlich da dies in der Regel aufgrund der Anlagenkonzeption nicht inline erfolgen kann.

DE 10 2013 101096 A1 betrifft eine Sol-Gel-Fluorpolymer-Beschichtung, die wenigstens eine Komponente A und eine Komponente B umfasst, wobei die Komponente A aus einem Kondensationsprodukt von Siliziumdioxid und wenigstens einem Alkoxysilan besteht, und die Komponente B aus wenigstens einem Fluorpolymer besteht.

CH 709 779 A2 betrifft eine Lackdispersion für die Herstellung von Antihaftschichten auf Oberflächen, insbesondere auf Kochgeschirrinnenoberflächen.

EP 2 578 323 A1 beschreibt ein Dekorationsverfahren von Kochgefäßen mit Sol-Gel-Beschichtung.

Bekanntermaßen verlieren Beschichtungen auf Sol-Gel Basis durch Beaufschlagung mit hohen Temperaturen an Antihaftwirkung. Daher kommt eine Lasermarkierung zur Erzeugung von Dekoren, Schriften oder Markierungen bei bisherigen Antihaftbeschichtungen nicht infrage. Es werden nämlich durch den Laser hohe Energien eingetragen und die Beschichtung zumindest lokal stark erwärmt, wodurch die Beschichtungen geschädigt wird und die Funktionen wie Antihaftwirkung, Korrosionsschutz und leichte Reinigung verloren gehen.

Eine Aufgabe der Erfindung war es, eines oder mehrere dieser Probleme zu lösen. Insbesondere war es eine Aufgabe, eine Beschichtung bereitzustellen, die dauerhaft markierbar ist und nach einer Markierung vorteilhafte Funktionen, wie Antihaftwirkung, Korrosionsschutz und/oder leichte Reinigung, behält.

Von der Erfindung werden Verfahren zur Herstellung einer lasermarkierten Beschichtung auf einer Oberfläche oder einem Teil einer Oberfläche eines Gegenstandes gemäß der unabhängigen Ansprüche 1 und 5 angegeben. Gemäß weiteren unabhängigen Ansprüchen wird eine Beschichtung angegeben, die nach einem der Verfahren erhältlich ist und die eine Lasermarkierung aufweist, sowie ein Gegenstand, der eine solche Beschichtung aufweist.

Nach einer grundlegenden Idee der Erfindung wird eine Zusammensetzung eingesetzt, mit der sich eine Beschichtung durch die Verwendung der Sol-Gel Technologie herstellbar ist. Die Zusammensetzung ist zunächst in Form eines Sols vorliegend, das sich auf eine Oberfläche aufbringen lässt. Auf der Oberfläche wird ein Gel gebildet, das zu einer Beschichtung ausgehärtet wird. In der Zusammensetzung ist ein lasermarkierbares Pigment vorhanden, sodass die erhaltene Beschichtung sich durch einen Markierlaser beschriften und oder mit Mustern/Bildern versehen lässt.

Überraschenderweise hat sich gezeigt, dass eine Antihaftwirkung der Beschichtung erhalten bleibt. Man hätte erwartet, dass die Beschichtung durch Beaufschlagung mit hohen Temperaturen infolge des Energieeintrags mit einem Laser an Antihaftwirkung verlieren. Überraschenderweise ist dies jedoch nicht der Fall. Im Gegenteil nimmt sogar die Benetzbarkeit der Oberfläche aufgrund einer beobachteten Abnahme der Oberflächenenergie ab. Es wird vermutet, ohne dass dies für die Erfindung als obligatorisch anzusehen ist, dass bei der erfindungsgemäßen Beschichtung durch die Laserbehandlung Mikrostrukturen gebildet werden, durch welche diese Eigenschaften erhalten werden.

Es hat sich ferner gezeigt, dass die erfindungsgemäße Beschichtung sehr temperaturstabil ist.

Die erfindungsgemäße Beschichtung ist insbesondere als Antihaftbeschichtung verwendbar.

Die in einem der erfindungsgemäßen Verfahren eingesetzte wässrige Zusammensetzung zur Erzeugung einer lasermarkierbaren Beschichtung, weist die folgenden Komponenten auf:
A) ein kolloidales, amorphes Siliciumdioxid,
B) ein Alkoxysilan, dass in der wässrigen Zusammensetzung ganz oder teilweise hydrolysiert sein kann, vorzugsweise ist,
   und gegebenenfalls, d.h. wenn Alkoxysilan ganz oder teilweise hydrolysiert ist, zusätzlich zu den Komponenten A) und B), oder anstelle der Komponenten A) und B) die Komponente
C) ein Reaktionsprodukt aus dem kolloidalen, amorphen Siliciumdioxid und dem in der wässrigen Zusammensetzung hydrolysierten Alkoxysilan,
   sowie als weitere Komponenten
D) eine Säure oder Base,
E) zumindest ein lasersensitives Pigment und/oder lasersensitives Färbemittel, das in der wässrigen Zusammensetzung suspendiert und/oder in dem Reaktionsprodukt C) verteilt ist.

Das kolloidale, amorphe Siliciumdioxid liegt in wässriger Phase kolloidal vor, d.h. als kolloidale Suspension. Ein solches kolloidales, amorphes Siliciumdioxid wird auch als Kieselsol bezeichnet.

Die wässrige Zusammensetzung weist als weiteren Bestandteil Wasser auf, was durch den Namen "wässrige Zusammensetzung" ausgedrückt ist. Das Wasser wird auch wässrige Phase bezeichnet.

Die wässrige Zusammensetzung ist erhältlich durch Vermischen von
- einem kolloidalen, amorphen Siliciumdioxid,
- zumindest einem Alkoxysilan, und
- zumindest einem lasersensitiven Pigment und/oder lasersensitivem Färbemittel.

Als weiterer Bestandteile kann Wasser zugegeben werden. Als noch weiterer Bestandteil kann Säure oder Base zugegeben werden. Als noch weiterer Bestandteil kann ein Organopolysiloxan zugegeben werden. Die Komponente C) muss nicht zugegeben werden, sondern kann in der hergestellten wässrigen Zusammensetzung aus den Komponenten A) und B) gebildet werden, wie unten noch erläutert. Bei einer Herstellung der wässrigen Zusammensetzung aus oben genannten getrennten Ausgangskomponenten kann das kolloidale, amorphe Siliciumdioxid als Ausgangskomponente bereits in einer wässrigen Phase vorliegen. Diese wässrige Phase kann die wässrige Phase der hergestellten wässrigen Zusammensetzung bilden.

Ein Vermischen der Komponenten der wässrigen Zusammensetzung, du weiterer hierin genannter Zusammensetzungen, kann unter Rühren erfolgen.

Die Säure oder die Base werden zum Einstellen eines erwünschten pH Wertes der wässrigen Zusammensetzung verwendet. Die Reaktionsgeschwindigkeit nachfolgend beschriebener chemischer Reaktionen ist pH abhängig. Der pH Wert kann eingestellt werden, um die Reaktionsgeschwindigkeit wie gewünscht zu steuern. Die Komponente A) kann vor Herstellung der wässrigen Zusammensetzung, also vor Vermischen mit weiteren Komponenten, bereits als kolloidales, amorphes Siliciumdioxid in wässriger Phase vorliegen, und der pH Wert der Komponente A) kann, vor Vermischen mit weiteren Komponenten, variieren, insbesondere von sauer bis basisch, sodass die wässrige Zusammensetzung bei Vermischen nur der Komponenten A), B) und E) je nach Wahl der Ausgangskomponente A) einen variierenden pH aufweisen kann. Die Säure oder Base wird eingesetzt, um den wunschgemäßen pH in der wässrigen Zusammensetzung einzustellen, der in verschiedenen Bereichen, liegen kann. Besonders vorteilhaft sind ein saurer oder ein basischer pH-Wert-Bereich.

Die Eigenschaften der wässrigen Zusammensetzungen sind über die Zeit veränderlich. Die Komponente B), das Alkoxysilan, liegt im Moment der Herstellung der wässrigen Zusammensetzung in Form emulgierter Tröpfchen innerhalb einer wässrigen Phase vor. Die Bildung emulgierter Tröpfchen und die Tröpfchengröße können beispielsweise durch Rühren eingestellt werden. Im Laufe der Zeit nach Herstellung der wässrigen Zusammensetzung aus den Einzelkomponenten hydrolysiert das Alkoxysilan und es wird ein hydrolysiertes Alkoxysilan gebildet, welches in der wässrigen Phase der wässrigen Zusammensetzung löslich ist. Im Laufe der Zeit kann das Alkoxysilan vollständig hydrolysiert werden. Diese zeitliche Änderung wird dadurch ausgedrückt, dass das Alkoxysilan in der wässrigen Zusammensetzung ganz oder teilweise hydrolysiert sein kann. Im Laufe der Zeit wird also das Alkoxysilan von einem nicht-hydrolysierten Zustand zu einem teilweise hydrolysierten Zustand, mit steigendem Anteil hydrolysiertem Alkoxysilan, und möglicherweise bis zu einem vollständig hydrolysierten Zustand übergehen.

Hydrolysiertes Alkoxysilan reagiert in der wässrigen Zusammensetzung mit dem kolloidalen, amorphen Siliciumdioxid, welches aktive Gruppen aufweist, wodurch die Komponente C) gebildet wird. Insbesondere finden Kondensationsreaktionen zwischen dem Kieselsol und dem hydrolisierten Alkoxysilan statt. Auch dieser Prozess ist zeitabhängig. Die Komponente C) kann anfangs in einer sehr geringer Menge vorhanden sein, wenn diese Reaktion in nur geringem Ausmaß stattgefunden hat. Die Menge C) wird mit der Zeit ansteigen. Im zeitlichen Verlauf nach der Herstellung der wässrigen Zusammensetzung finden also folgende Prozesse statt:
1. Hydrolyse von Alkoxysilan
2. Reaktion von hydrolysiertem Alkoxysilan mit kolloidalem, amorphem Siliciumdioxid Hierbei ist es prinzipiell möglich, dass Alkoxysilan, hydrolysiertes Alkoxysilan und Reaktionsprodukt aus hydrolysiertem Alkoxysilan und kolloidalem, amorphem Siliciumdioxid gleichzeitig vorliegen. Ebenso ist es möglich, dass oben bezeichnete Reaktionen gleichzeitig ablaufen.

Unter dem Begriff "gegebenenfalls zusätzlich zu den Komponenten A) und B), oder anstelle der Komponenten A) und B)" ist zu verstehen, dass die Komponente C) eine optionale weitere Komponente ist, oder eine optionale alternative Komponente zu A) und C). Die Komponente C) wird dann gebildet, wenn Alkoxysilan hydrolysiert wird und dann mit kolloidalem, amorphem Siliciumdioxid weiter reagieren kann. Insofern bringt der Begriff "gegebenenfalls" zum Ausdruck, dass Alkoxysilan zumindest teilweise hydrolysiert sein muss, was grundsätzlich nicht zwingend ist, da die Erfindung auch Zusammensetzungen betrifft, wo dies nicht der Fall ist.

Infolge der Reaktion von hydrolysiertem Alkoxysilan mit Kieselsol wird die wässrige Zusammensetzung von einem Sol-Zustand in einen Gel-Zustand überführt. Von dem Schutz der Erfindung sollen diese Zustände sowie alle Zwischenzustände erfasst sein. Eine Verarbeitung der wässrigen Zusammensetzung zur Herstellung einer Beschichtung, wie nachfolgend noch anhand erfindungsgemäßer Verfahren beschrieben, erfolgt vorzugsweise in einem Zustand, in dem die wässrige Zusammensetzung flüssig ist und als Sol vorliegt.

Das lasersensitive Pigment oder das lasersensitive Färbemittel ändert unter dem Einfluss von Laserlicht seine Farbe oder führt zu einer Farbveränderung einer Matrix, welche bei Erzeugung der Antihaftbeschichtung aus der wässrigen Zusammensetzung erhältlich ist und in welche das lasersensitive Pigment und/oder das lasersensitive Färbemittel eingelagert ist. Das lasersensitive Pigment und das lasersensitive Färbemittel werden auch als Markierungskomponente bezeichnet. Eine erwähnte Matrix ist das Reaktionsprodukt aus dem kolloidalen, amorphen Siliciumdioxid und dem hydrolysierten Alkoxysilan, welches bei Bildung der Beschichtung ein dreidimensionales Netzwerk bildet. Grundsätzlich wird unter einer Matrix ein Material in einem Verbundwerkstoff verstanden, in das andere Bestandteile, in diesem Fall das lasersensitive Pigment und/oder das lasersensitive Färbemittel, eingebettet sind.

Wenn hierin von einer "Änderung der Farbe" oder einer "Farbveränderung" die Rede ist, kann diese ein Umschlagen von einem Farbton in einen anderen, wie beispielsweise von Gelb nach Rot oder von Transparent nach Schwarz sein. Im Sinne der Erfindung soll unter diesem Begriff aber auch eine Helligkeitsveränderung, beispielsweise von Hellbraun nach Dunkelbraun verstanden werden.

In einer Ausführungsform der Erfindung ist das zumindest eine Alkoxysilan eine Verbindung der allgemeinen chemischen Formel 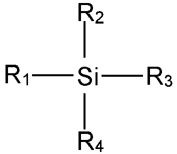 wobei R₁, R₂, R₃ und R₄ unabhängig voneinander eine Alkylgruppe mit einer Kettenlänge in dem Bereich von C₁ bis C₁₂, eine Phenylgruppe oder eine Alkoxygruppe mit einer Kettenlänge im Bereich von C₁ bis C₄ sind, mit der Maßgabe, dass wenigstens zwei Reste von R₁, R₂, R₃ und R₄ Alkoxygruppen mit einer Kettenlänge im Bereich von C₁ bis C₄ sind.

Ein besonders vorteilhaftes Alkoxysilan ist ein Alkyl-Tri-Alkoxysilan, insbesondere MethylTrimethoxysilan.

In einer Ausführungsform der Erfindung ist das lasersensitive Pigment und/oder das lasersensitive Färbemittel ausgewählt aus einem Metalloxid, beispielweise der Metalle Kupfer, Bismuth, Zinn, Zink, Silber Antimon, Mangan, Eisen, Nickel und Chrom, einem Metallhydroxid, beispielweise der Metalle Kupfer, Bismuth, Zinn, Zink, Silber Antimon, Mangan, Eisen, Nickel und Chrom, einem Metallsulfid, beispielweise der Metalle Kupfer, Bismuth, Zinn, Zink, Silber Antimon, Mangan, Eisen, Nickel und Chrom, oder einem Metallphosphat, beispielweise der Metalle Kupfer, Bismuth, Zinn, Zink, Silber Antimon, Mangan, Eisen, Nickel und Chrom, oder einer beliebigen Mischung zweier oder mehrerer dieser Verbindungen. Eine Mischung kann auch eine Mischung mehrerer Oxide, Hydroxide, Sulfide oder Phosphate sein. In einer speziellen Variante kann beispielsweise eine Mischung aus Titandioxid und Zinn-Antimon-Oxid verwendet werden.

In einer Ausführungsform ist das lasersensitive Pigment auf einen Trägerpartikel aufgebracht, der insbesondere ausgewählt ist aus natürlichem Glimmer, hier besonders Muskovit, synthetischem Glimmer, Talkum sowie Glassflakes.

Grundsätzlich ist die Art des lasersensitiven Pigments und/oder lasersensitiven Färbemittels nicht auf ein bestimmtes beschränkt. Auch folgende Substanzen sind verwendbar:
Aus der EP-A-190,997 ist ein Verfahren zur Lasermarkierung bekannt, bei dem unter anderem Titanoxid und Antimonoxid als Pigmente in ein Polymermaterial eingearbeitet werden. Aus der EP-A-330,869 ist der Einsatz von Titanoxid-Weißpigment bekannt. Die EP-A-400,305 und die EP-A-542,115 beschreiben die Verwendung von Kupferhydroxidphosphat bzw. von Molybdän-(IV)-oxid als Laserpigmente. In der US-A-5,063,137 wird unter anderem die Verwendung von wasserfreien Metallphosphaten und Phosphorsäure-basierenden Gläsern offenbart. Die EP-A-797,511 beschreibt den Einsatz von plättchenförmigen Pigmenten mit einer Schicht aus dotiertem Zinnoxid. In der US-A-5,489,639 wird der Einsatz ausgewählter Kupfersalze (Phosphate, Sulfate, Thiocyanate) beschrieben. Die EP-A-764,683 offenbart die Verwendung von Kupferpyrophosphat-Hydrat und/oder Mangansulfathydrat als Pigmente. Aus der EP-A-808,866 ist der Einsatz von Borsäureanhydrid bekannt. Die WO-A-98/58805 offenbart eine Reihe von Kupferphosphaten als Laserpigmente. Die WO-A-99/55773 beschreibt unter anderem die Verwendung von Zinkhydroxystannat und Zinn(II)-Oxalat. Aus der DE-A-199 05 358 ist die Verwendung von Alkalikupferdiphosphat bekannt. Die WO-A-01/00719 beschreibt den Einsatz von Antimonoxid mit Teilchengrößen oberhalb von 0,5 µm. Aus der EP-A-1,190,988 ist die Verwendung von bestimmten Wismut-Mischoxiden bekannt. In der WO-A-01/78994 wird der Einsatz von Kupferfumarat, Kupfermaleat sowie deren Mischungen vorgeschlagen. In der DE-A-100 53 639 wird die Verwendung ausgewählter Salze, unter anderem verschiedener Kobalt- und Eisenphosphate, vorgeschlagen. Die DE-A-100 34 472 beschreibt die Verwendung von mit bestimmten Siliziumverbindungen oberflächenmodifizierten Teilchen. In der EP-A-753,536 wird der Einsatz von mindestens zwei Arten von Metalloxiden beschrieben. Die EP-A-105,451 beschreibt Polyphenylensulfid-Formmassen, die zur Lasermarkierung mit ausgewählten Zusätzen, beispielsweise mit der Kombination von Bleichromat und Bleimolybdat, mit Nickel-Antimon-Titanat oder mit Kobalt-Zink-Silizium modifiziert worden sind. Aus der DE 102004050481 ist die Verwendung von Zinnphosphat als Pigment zur Laserbeschriftung bekannt. Die DE 102004050480 beschreibt die Verwendung einer salzartigen Verbindung mit wenigstens zwei verschiedenen Metallkationen als Laserpigment. Die DE 102004050571 beschreibt die Verwendung einer salzartigen Verbindung oder einer Mischung salzartiger Verbindungen, die wenigstens Zinn als zweiwertiges Kation und gegebenenfalls weitere Kationen und Oxoanionen, Anionen von organischen Carbonsäuren oder Anionen der Kohlensäure enthält. In EP 2052032 A sind partikuläre salzartige Verbindungen offenbart, die-unter dem Einfluß von Laserlicht ihre Farbe änderen oder zu einer Farbveränderung einer Matrix führen. Genannt werden Metallphosphate, Metallphosphite, wie Orthophosphate, Polyphosphate, Pyrophosphate und Hydroxidphosphate, insbesondere Kupfer-Phosphate, Zinn-Phosphate, Eisen-Phosphate, Nickel-Phosphate, Molybdän-Phosphate, Kobalt-Phosphate, Mangan-Phosphate, Antimon-Phosphate und Kupfer-Hydroxidphosphat.

Das lasersensitive Pigment und/oder lasersensitive Färbemittel kann in partikulärer Form vorliegen. Dies soll bedeuten, dass das Pigment oder Färbemittel in Form feiner fester Teilchen vorliegt. In einer speziellen Ausführungsform hat das Pigment oder das Färbemittel eine mittlere Teilchengröße (D50) von weniger als 100 µm vorzugsweise weniger als 15 µm besonders bevorzugt weniger als 0,5 µm.

Die Anteile genannter Komponenten, bezogen auf die Gesamtmasse der wässrigen Zusammensetzung, sind insbesondere folgende:
- kolloidales, amorphes Siliciumdioxid: 10 - 20 Gew.-%
- Alkoxysilan: 20 - 50 Gew.-%
- lasersensitives Pigment und/oder lasersensitives Färbemittel: 0,3 - 20 Gew.-% Sofern ein lasersensitives Pigment und ein lasersensitives Färbemittel in Summe eingesetzt werden, betrifft der genannte Mengenbereich die Summe aus beiden.

Eine Säure oder Base zum Einstellen des pH-Wertes werden in Mengen eingesetzt, die zum Erreichen des erwünschten pH Wertes erforderlich sind. Beispielhafte Mengen sind nachfolgend angegeben.

In einer Ausführungsform weist die wässrige Zusammensetzung als weitere Komponente zumindest ein Organopolysiloxan auf. Bevorzugt ist ein lineares Organopolysiloxan. Insbesondere ist das Organopolysiloxan bei Raumtemperatur flüssig, insbesondere ölförmig. Durch Zugabe des Organopolysiloxans können Antihafteigenschaften einer aus der wässrigen Zusammensetzung hergestellten Beschichtung noch verbessert werden. Das Organopolysiloxan kann mit hydrolysiertem Alkoxysilan und Kieselsol oder mit einem Reaktionsprodukt aus hydrolysiertem Alkoxysilan und Kieselsol reagieren und in ein Netzwerk bzw. eine Matrix eingebaut werden. Beispielhafte Organopolysiloxane sind Phenylmethylpolysiloxan, Poly(Dimethylsiloxan) und funktionelle Poly(Dimethylsiloxane), vorzugsweise mit einer kinematische Viskosität bei 20 °C von 50-300 mm/s.

Ein Organopolysiloxan kann in der wässrigen Zusammensetzung in 0,3 bis 10 Gew.-% vorhanden sein, bezogen auf das Gesamtgewicht der Zusammensetzung.

Wie erwähnt, enthält die wässrige Zusammensetzung eine Säure oder eine Base. In einer Variante weist die wässrige Zusammensetzung eine Säure auf. Die Säure ist insbesondere ausgewählt aus Ameisensäure, Essigsäure, Oxalsäure. Eine Säure kann in der Zusammensetzung in einer Menge von insbesondere 0,2 bis 5 Gew.-%, bezogen auf das Gesamtgewicht der Zusammensetzung, vorhanden sein. Besonders vorteilhaft ist eine Säure oder saure Verbindung, die bei erhöhter Temperatur, insbesondere bei 150°C bis 250°C, flüchtig ist.

Abhängig vom erwünschten pH-Wert der wässrigen Zusammensetzung kann alternativ auch eine Base zum Einsatz kommen. Diese kann in einer Menge von insbesondere 0,2 bis 5 Gew.-%, bezogen auf das Gesamtgewicht der Zusammensetzung, vorhanden sein. Beispielhafte Basen sind Natriumhydroxid und Kaliumhydroxid. Besonders vorteilhaft ist eine Base oder basische Verbindung, die bei erhöhter Temperatur, insbesondere bei 150°C bis 250°C, flüchtig ist.

In einer Ausführungsform weist die wässrige Zusammensetzung einen pH-Wert im Bereich von 2,5 bis 5 auf. Dieser pH-Wert kann beispielsweise mit einer oben genannten Säure oder Base eingestellt werden. Eine Einstellung eines solchen pH mit einer Base kann erforderlich sein, wenn die wässrige Zusammensetzung vor Basenzugabe einen noch niedrigeren pH aufweist.

Das erfindungsgemäße Verfahren zur Herstellung einer lasermarkierten Beschichtung auf einer Oberfläche oder einem Teil einer Oberfläche eines Gegenstandes nach Anspruch 1 weist auf:
a) Aufbringen einer wässrigen Zusammensetzung wie vorangehend beschrieben auf die zu beschichtende Oberfläche oder den zu beschichtenden Teil der Oberfläche,
b) Aushärten der aufgebrachten wässrigen Zusammensetzung unter Ausbildung einer Beschichtung, und weiterhin;
   - Bestrahlen der Beschichtung, zumindest abschnittsweise, mit einem Laserstrahl, sodass die Beschichtung lasermarkiert wird.

Die nachfolgenden Erläuterungen gelten für das erfindungsgemäße Verfahren nach dem unabhängigen Anspruch 1, wie auch für ein weiteres erfindungsgemäßes Verfahren nach Anspruch 5, das nachfolgend noch beschrieben ist.

Bei den erfindungsgemäßen Verfahren können wässrige Zusammensetzungen und insbesondere deren Komponenten eingesetzt werden, die zuvor beschrieben wurden.

Die Oberfläche, die erfindungsgemäß beschichtet werden soll, kann bereits aus einer anderweitigen Beschichtung gebildet sein, auch bei weiteren hierin noch beschriebenen Verfahren und Gegenständen. In diesem Fall weist der Gegenstand bereits eine Beschichtung auf, auf welche nach einem erfindungsgemäßen Verfahren eine weitere (d.h. erfindungsgemäße) Beschichtung aufgebracht wird.

Das Aufbringen kann durch Aufspritzen, Aufsprühen auf die Oberfläche oder durch Eintauchen der zu beschichtenden Oberfläche oder des Teils davon in die wässrige Zusammensetzung erfolgen. Bei dem Aufbringen wird ein Oberflächenfilm gebildet, der anschließend ausgehärtet werden kann.

Die wässrige Zusammensetzung ist vorzugsweise beim Aufbringen in einem Zustand, in dem das Alkoxysilan (Komponente B)) weitgehend oder vollständig hydrolysiert ist.

Das Aushärten kann durch stehen lassen des Oberflächenfilms geschehen, beispielsweise bei Raumtemperatur, womit eine Temperatur von 20-25°C gemeint ist. Das Aushärten erfolgt vorzugsweise bei erhöhter Temperatur, also durch Erwärmen, beispielsweise in einem Bereich von 150°C bis 250°C. Eine Erwärmung kann beispielsweise in einem Ofen, einer Wärmekammer oder mit einem Infrarot-Strahler erfolgen.

Beim Aushärten einer wässrigen Zusammensetzung können flüchtige Bestandteile aus der Zusammensetzung entweichen, wie beispielsweise nicht-reagiertes Alkoxysilan, flüchtige Säure, Alkohole oder wässriges Medium, also Wasser, und es verbleibt eine feste Beschichtung.

Als Oberfläche ist grundsätzliche jegliche Oberfläche denkbar. Die Ausdehnung und Gestaltung der Oberfläche, beispielsweise die Formgestaltung, sind prinzipiell nicht beschränkt. Ebenso ist das Material der Oberfläche nicht beschränkt. Es hat sich gezeigt, dass in der vorliegenden Erfindung eine Oberfläche aus Metall, beispielsweise Stahl, Edelstahl oder Aluminium, Keramik, Glas oder Glaskeramik vorteilhaft ist.

Die zu beschichtende Oberfläche oder der zu beschichtende Teil der Oberfläche kann erwärmt werden, insbesondere auf eine Temperatur im Bereich von 30°C bis 60°C, vorzugsweise 40°C bis 50°C. Man erhält dadurch eine noch schnellere Aushärtung der wässrigen Zusammensetzung zur Bildung der Beschichtung und/oder, sofern gewünscht, eine dickere Beschichtung.

Die Dicke der Beschichtung liegt vorzugsweise im Bereich von 20 bis 60 µm, vorzugsweise 30 bis 50 µm, insbesondere bevorzugte 35 bis 50 µm.

Die zu beschichtende Oberfläche oder der Teil der zur beschichtenden Oberfläche kann vor Aufbringen der wässrigen Zusammensetzung mechanisch und/oder chemisch vorbehandelt werden. Die Oberfläche kann aufgeraut werden, beispielsweise durch Schleifen oder Sandstrahlen. Man erhält hierdurch eine noch bessere Haftung der Beschichtung auf der Oberfläche.

Es ist möglich, eine Zwischenschicht zwischen der Oberfläche und der aus der wässrigen Zusammensetzung gebildeten Beschichtung zu bilden. Hierzu kann auf die Oberfläche/den Teil der Oberfläche zunächst eine Zwischenschicht aufgebracht werden, bevor das Aufbringen der wässrigen Zusammensetzung erfolgt. Die Zwischenschicht kann beispielsweise eine Metalloxidschicht sein, insbesondere eine Aluminiumoxid-Schicht. Eine Zwischenschicht kann durch ein thermisches Spritzverfahren erhalten werden. Als besonders vorteilhaft hat sich die Ausbildung einer Zwischenschicht erwiesen, wenn die zu beschichtende Oberfläche eine Aluminium- oder Edelstahloberfläche ist. Die Zwischenschicht dient hierbei vorteilhafterweise als Haftvermittler und Hartgrund zwischen der Metalloberfläche und der erfindungsgemäßen Beschichtung. Die Zwischenschicht kann auch eine chemisch gebildete Konversionsschicht wie zum Bespiel eine Phosphatierung, eine Metallschicht wie zum Beispiel eine Aluminisierung oder eine keramische Fritte sein.

In einem weiteren Aspekt betrifft die Erfindung das Verfahren nach Anspruch 5 zur Herstellung einer Beschichtung auf einer Oberfläche oder einem Teil einer Oberfläche eines Gegenstandes, aufweisend:
i) Aufbringen einer ersten wässrigen Zusammensetzung, aufweisend
   1A) ein kolloidales, amorphes Siliciumdioxid,
   1B) zumindest ein Alkoxysilan, das in der wässrigen Zusammensetzung ganz oder teilweise hydrolysiert sein kann,
   und gegebenenfalls zusätzlich zu den Komponenten 1A) und 1B), oder anstelle der Komponenten 1A) und 1B) die Komponente
   1C) ein Reaktionsprodukt aus dem kolloidalen, amorphen Siliciumdioxid und dem in der wässrigen Zusammensetzung hydrolysierten Alkoxysilan,
   und weiterhin
   1D) eine Säure oder eine Base,
   F) eine Komponente, die ausgewählt ist aus einen Farbpigment, einem Abriebfestiger und/oder einem Antikorrosionsmittel oder einer Kombination eines oder mehrerer davon,
   auf eine zu beschichtende Oberfläche oder einen zu beschichtenden Teil der Oberfläche, sodass dort ein Film aus der ersten Zusammensetzung gebildet wird,
ii) Aufbringen einer zweiten wässrigen Zusammensetzung, aufweisend
   2A) ein kolloidales, amorphes Siliciumdioxid,
   2B) ein Alkoxysilan, das in der wässrigen Zusammensetzung ganz oder teilweise hydrolysiert sein kann
   und gegebenenfalls zusätzlich zu den Komponenten 2A) und 2B), oder anstelle der Komponenten 2A) und 2B) die Komponente
   2C) ein Reaktionsprodukt aus dem kolloidalen, amorphen Siliciumdioxid und dem in der wässrigen Zusammensetzung hydrolysierten Alkoxysilan,
   und weiterhin
   2D) eine Säure oder Base

   auf den Film aus der ersten Zusammensetzung,
   wobei die erste wässrige Zusammensetzung und/oder die zweite wässrige Zusammensetzung als Komponente E) zumindest ein lasersensitives Pigment und/oder ein lasersensitives Färbemittel aufweist/aufweisen, das in der jeweiligen wässrigen Zusammensetzung suspendiert ist,
iii) Aushärten der ersten und der zweiten wässrigen Zusammensetzung und Ausbildung einer Beschichtung,
   wobei das Verfahren weiterhin aufweist:
   - Bestrahlen der Beschichtung, zumindest abschnittsweise, mit einem Laserstrahl, sodass die Beschichtung lasermarkiert wird.

Hierbei handelt es sich um ein zweistufiges Verfahren, in dem zwei verschiedene wässrige Zusammensetzungen, eine erste und eine zweite, eingesetzt werden. Wie oben erwähnt, kann ein lasersensitives Pigment und/oder ein lasersensitives Färbemittel in der ersten wässrigen Zusammensetzung, in der zweiten wässrigen Zusammensetzung oder in beiden wässrigen Zusammensetzungen vorhanden sein.

Die erste wässrige Zusammensetzung und/oder die zweite wässrige Zusammensetzung kann eine wässrige Zusammensetzung sein wie vorangehend beschrieben, also eine wässrige Zusammensetzung mit den Komponenten A), B), gegebenenfalls alternativ oder zusätzlich zu A) und B) die Komponente C), sowie weiterhin die Komponenten D) und E).

Die erste wässrige Zusammensetzung weist als weitere Komponente zumindest noch die Komponente F), ein Farbpigment, und/oder einen Abriebfestiger und/oder ein Antikorrosionsmittel auf, wobei ein Farbpigment besonders bevorzugt ist. Ein Farbpigment ist dazu geeignet, der Beschichtung eine gewünschte Farbe zu verleihen, die eine Grundfarbe der Beschichtung darstellt. In diese Grundfarbe können später Lasermarkierungen, Beschriftungen und Ähnliches eingebracht werden, die eine andere Farbe aufweisen und zu der Grundfarbe kontrastieren. Die Farbe des Farbpigments und die Farbe des lasersensitiven Pigments und/oder des lasersensitiven Färbemittels (Nachbehandlung mit Laser) oder die Farbe, die ein lasersensitives Pigment und/oder lasersensitive Färbemittel einer umgebenden Matrix nach Laserbehandlung verleiht, werden vorzugsweise so gewählt, dass sie zueinander kontrastierend sind. Beispielsweise kann die Farbe des Farbpigments eine helle Farbe sein und die vom lasersensitiven Pigment erzeugte Farbe dunkel sein oder umgekehrt.

Beispielhafte Farbpigmente als Komponente F) sind Titandioxid, Spinellschwarz, Ruß, Nickel- und Chromtitangelb, Kobaltblau, Chromoxidgrün, Eisenoxidrot.

Ein Abriebfestiger ist eine Substanz, die die Abriebfestigkeit der Beschichtung erhöht. Beispielhafte Abriebfestiger sind Korund, Quarzmehl und Silziumcarbid.

Bei dem oben genannten Verfahren unter Aufbringen von einer ersten und einer zweiten wässrigen Zusammensetzung wird die zweite wässrige Zusammensetzung auf die noch nicht ausgehärtete erste wässrige Zusammensetzung aufgebracht. Dies wird auch als nass-in-nass-Aufbringung bezeichnet. Hierbei findet eine teilweise Vermischung der ersten wässrigen Zusammensetzung und der zweiten wässrigen Zusammensetzung statt. Insbesondere wird ein Gradient zwischen den beiden wässrigen Zusammensetzungen ausgebildet. Ein solcher Gradient findet sich in der schließlich ausgebildeten Beschichtung wieder. Die Aufbringung von einer ersten und einer zweiten wässrigen Zusammensetzung hat beispielsweise dann einen Vorteil, wenn in der ersten wässrigen Zusammensetzung ein Farbpigment vorhanden ist. Die Farbpigmente, als oben genannte Komponente F), können eine Rauheit bewirken, wenn die erste wässrige Zusammensetzung ausgehärtet wird. Die zweite wässrige Zusammensetzung bildet hingegen eine Deckschicht, die kein oder nur wenig Farbpigment als Komponente F) enthält, sodass beim Aushärten der zweiten wässrigen Zusammensetzung ein glatterer Beschichtungsteil gebildet wird, der bei dem beschichteten Produkt außenseitig ist. Hierdurch werden besonders gute Antihaft-Eigenschaften erreicht. Ferner ist es möglich, die erste wässrige Zusammensetzung und die zweite wässrige Zusammensetzung hinsichtlich Antihafteigenschaften zu optimieren. Beispielsweise ist die erste wässrige Zusammensetzung vorrangig dazu da, ein Pigment, als eine Komponente F), einzubringen, während mit der außenseitigen zweiten wässrigen Zusammensetzung insbesondere die Antihafteigenschaft der Beschichtung erreicht werden soll. Es ist beispielsweise möglich, in die zweite wässrige Zusammensetzung einen höheren Anteil eines Organopolysiloxans, vorangehend erwähnt, einzubringen.

Nachdem nach einem der vorangehend genannten Verfahren eine Beschichtung erhalten wurde, wird in einem weiteren Schritt die Beschichtung zumindest abschnittweise mit einem Laserstrahl bestrahlt, um eine Lasermarkierung herzustellen. Eine Lasermarkierung ist grundsätzlich in ihrer Art und Gestaltung nicht beschränkt. Möglich ist eine Lasermarkierung in Form einer Beschriftung, eines Musters, eines Logos, eines Zeichens und eine Kombination von einem oder mehreren davon.

Die Auswahl der Komponente E) erfolgt in der Regel so, dass diese im Wellenlängenbereich des zur Verfügung stehenden Laserlichtes eine möglichst starke Absorption aufweist. Die Wellenlängenbereiche des eingesetzten Laserlichtes sind grundsätzlich keinen Beschränkungen unterworfen. Geeignete Laser haben im Allgemeinen eine Wellenlänge im Bereich von 157 nm bis 10,6 µm, vorzugsweise im Bereich von 532 nm bis 10,6 µm. Beispielsweise seien hier CO₂-Laser (10,6 µm) und NdYAG-Laser (1064 nm) oder gepulste UV-Laser erwähnt. Typische Excimerlaser weisen folgende Wellenlängen auf: F2-Excimerlaser (157 nm), ArF-Excimerlaser(193 nm), KrCI-Excimerlaser (222 nm), KrF-Excimerlaser (248 nm), XeCI-Excimer-laser (308 nm), XeF-Excimerlaser (351 nm), frequenzvervielfachte NdYAG-Laser mit Wellenlängen von 532 nm (frequenzverdoppelt), 355 nm (frequenzverdreifacht) oder 265 nm (frequenzvervierfacht). Besonders bevorzugt werden NdYAG-Laser und CO₂-Laser eingesetzt. Besonders bevorzugt erfolgt das Bestrahlen bei einer Wellenlänge in dem Bereich von 1000 bis 1100 nm.

Die Energiedichten der erfindungsgemäß eingesetzten Laser liegen im Allgemeinen im Bereich von 0,3 mJ/cm² bis 50 J/cm², vorzugsweise 0,3 mJ/cm² bis 10 J/cm². Bei der Verwendung von gepulsten Lasern liegt die Pulsfrequenz im Allgemeinen im Bereich von 1 bis 30 kHz.

In einem weiteren Aspekt betrifft die Erfindung eine Beschichtung, die eine Lasermarkierung aufweist, insbesondere eine Beschichtung mit Antihafteigenschaften, erhältlich nach einem vorangehend genannten Verfahren.

Die Beschichtung weist insbesondere auf:
I) ein Reaktionsprodukt aus einem kolloidalen, amorphen Siliciumdioxid und einem hydrolysierten Alkoxysilan,
II) zumindest ein lasersensitives Pigment und/oder lasersensitives Färbemittel, das in vorangehend genanntem Reaktionsprodukt I) verteilt ist,
   und optional:
III) eine Komponente, die ausgewählt ist aus einen Farbpigment, und/oder einem Abriebfestiger und/oder einem Antikorrosionsmittel.

Die Komponente I) der Beschichtung ist insbesondere ein dreidimensionales Netzwerk.

Die Komponente I) ist insbesondere im getrockneten Zustand.

Die Komponente I) ist in der Beschichtung insbesondere ein Feststoff.

Es wird, wie oben bereits erläutert, bei der Herstellung der Beschichtung zunächst durch Reaktion von kolloidalem, amorphem Siliciumdioxid und hydrolysiertem Alkoxysilan in der wässrigen Zusammensetzung ein Gel gebildet, welches ein dreidimensionales Netzwerk ausbildet, das Flüssigkeit, insbesondere Wasser, enthält, und das noch weitere flüchtige Komponenten, wie insbesondere nicht reagiertes Alkoxysilan, Säure oder Base, enthalten kann. Das Gel wird zu der Beschichtung ausgehärtet. Beim Aushärten kann der Vernetzungsgrad des Gels erhöht werden. Beim Aushärten wird das Gel insbesondere getrocknet, wobei Flüssigkeit und gegebenenfalls vorhandene flüchtige Komponenten entweichen können, sodass die Komponente I) im getrockneten Zustand erhalten wird. Somit sind aus der Beschichtung vorzugsweise flüssige oder flüchtige Bestandteile, wie Wasser, flüchtige Säure/Base, oder Alkoxysilan, entfernt, was insbesondere durch Erhitzen erfolgen kann.

Die Komponente III) der Beschichtung ist vorhanden, wenn eine solche Komponente gemäß einem oben beschriebenen Verfahren zur Herstellung einer Beschichtung verwendet wird.

Die Art des Gegenstandes ist in keiner Weise beschränkt. Auf Oberflächenmaterialien wurde bereits zuvor eingegangen. Besonders geeignete Gegenstände im Sinne der Erfindung sind ausgewählt aus Kochgeschirr, Backgeschirr, Bratgeschirr, Scheren, Messer, Schweißspiegel und Bügeleisen.

Die Beschichtung weist eine Lasermarkierung auf. Eine lasermarkierte Beschichtung ist erhältlich nach einem o.g. Verfahren, bei dem weiterhin eine Lasermarkierung durchgeführt wird oder durch Lasermarkierung einer Beschichtung, die durch Härten einer wässrigen Zusammensetzung wie vorangehend beschrieben auf einer Oberfläche oder einem Teil einer Oberfläche eines Gegenstandes erhalten ist.

Ein weiterer Aspekt der Erfindung ist ein Gegenstand, aufweisend eine Oberfläche, die wenigstens zum Teil mit einer vorangehend genannten Beschichtung beschichtet ist. Der Gegenstand ist durch ein vorangehend beschriebenes Verfahren erhältlich oder durch Härten einer wässrigen Zusammensetzung wie vorangehend beschrieben auf seiner Oberfläche oder einem Teil seiner Oberfläche. Besonders bevorzugt sind metallische, keramische und glaskeramische Oberflächen.

Ferner offenbart ist ein Kit zur Herstellung einer wässrigen Zusammensetzung zur Erzeugung einer lasermarkierbaren Beschichtung, insbesondere einer oben offenbarten wässrigen Zusammensetzung, aufweisend, in voneinander getrennter Form, die Bestandteile
a) ein kolloidales, amorphes Siliciumdioxid,
b) zumindest ein Alkoxysilan
   sowie weiterhin
c) ein lasersensitives Pigment und/oder lasersensitives Färbemittel, welches ebenfalls als getrennter Bestandteil vorliegen kann oder in dem Bestandteil a) und/oder dem Bestandteil b) enthalten oder mit diesem vermischt sein kann.

Das Kit ist so ausgestaltet, dass die Bestandteile a) und b) getrennt, vorzugsweise in separaten Behältnissen vorliegen. Die Bestandteile a) und b) können in einer gemeinsamen Verpackung, welche aber die Bestandteile a) und b) getrennt voneinander enthält, z.B. in separaten Behältnissen innerhalb dieser Verpackung, verpackt sein. Die Bestandteile a) und b) können in einem dieser Behältnisse oder in einem weiteren Behältnis vermischt werden. Der Bestandteil a) liegt in flüssiger Form vor, insbesondere in wässriger Phase. Der Bestandteil b) liegt vorzugsweise in flüssiger Form vor.

Das Kit kann weiterhin eine Gebrauchsanleitung zur Vermischung der Bestandteile, zur Herstellung der wässrigen Zusammensetzung und/oder zur Herstellung einer Beschichtung aufweisen. Das Kit kann, getrennt von den Bestandteilen a) und b), oder mit einem oder beiden der Bestandteile a) und b) vermischt, weitere Bestandteile enthalten, die in dieser Offenbarung genannt sind, insbesondere Bestandteile, die Bestandteil einer zuvor offenbarten wässrigen Zusammensetzung sind oder sein können. Weitere Bestandteile sind insbesondere einer oder mehrere der folgenden:
- Wasser
- eine Säure oder Base
- ein Organopolysiloxan. Organopolysiloxan kann als getrennter Bestandteil des Kits vorliegen kann oder in dem Bestandteil a) und/oder dem Bestandteil b) enthalten sein
- ein Farbpigment,
- ein Abriebfestiger
- ein Antikorrosionsmittel.

Nachfolgend wird die Erfindung anhand von Ausführungsbeispielen beschrieben.

### Beispiel 1: Herstellung einer laserbedruckten Pfanne (Innen)

Ein vorgeformter Aluminiumrohling wird industrieüblich gereinigt (entfettet) und Sandgestrahlt. Hierbei sollte eine Rauhtiefe Ra von etwa 3- 4 µm erreicht werden um einen guten Verbund mit der späteren Beschichtung zu erreichen.

Der so vorbereitete Rohling wird dann zweischichtig mit den vorhydrolysierten wässrigen Zusammensetzungen (Beschichtungssystemen) naß in naß spritzlackiert.

### Erste wässrige Zusammensetzung, bestehend aus:

| | | |
|---|---|---|
| 38 Teile | Kieselsol, Wirkstoffgehalt 30 % | z.B. Levasil 300 |
| 20 Teile | Titandioxid | |
| 8,7 Teile | demineralisiertes Wasser | |
| 0,5 Teile | Lineares Organopolysiloxan | z.B. Borchigol PL |
| 32 Teile | Methyltrimethoxysilan | |
| 0,8 Teile | Ameisensäure, Wirkstoffgehalt 50 % | |

### Zweite wässrige Zusammensetzung, bestehend aus:

| | | |
|---|---|---|
| 45 Teile | Kieselsol, Wirkstoffgehalt 30 % | z.B. Levasil 300 |
| 1,6 Teile | Lasermarkierbares Pigment auf Basis von Metalloxiden | z.B. Iriotec 8850 |
| 16,3 Teile | demineralisiertes Wasser | |
| 1,5 Teile | Lineares Organopolysiloxan | z.B. Borchigol PL |
| 35 Teile | Methyltrimethoxysilan | |
| 0,6 Teile | Ameisensäure, Wirkstoffgehalt 50 % | |

Die aufgebrachten Flüssig-Filme wurden für 20 Minuten bei 220 °C getrocknet und vernetzt. Die Trockenschichtdicke beträgt etwa 35-50 µm.

Die nun entstandene Antihaftbeschichtung kann dann mit einem YAG-Laser entsprechend dekoriert werden. Die Laser-Parameter werden in Leistung, Pulsfrequenz und Geschwindigkeit auf das gewünschte Ergebnis eingestellt. In den Versuchen haben sich bei einem Vectormark compact VMC1 der Firma Trumpf Geschwindigkeiten von 3000 - 5000 mm/s bei einer Pulsfrequenz von 20 - 40 kHz und voller Leistung für ein gutes Beschriftungsergebnis bewährt.

### Beispiel 2: Messung der Oberflächenenergie der Beschichtung

Die Oberflächenenergie der Beschichtung wurde vor der Behandlung mit dem Laser sowie nach einer Behandlung mit dem Laser, bei verschiedener Laserleistung, d.h. verschiedenen Energieeinträgen, ermittelt. Die Ergebnisse sind in der nachfolgenden Tabelle gezeigt:

| Substrat | Oberflächenenergie σ [mN/m] |
|---|---|
| Original Oberfläche | 27,1 |
| Mittlere Laserleistung | 24,4 |
| Hohe Laserleistung | 20,1 |

Tatsächlich bleibt die Antihaftwirkung erhalten. Im Gegenteil nimmt die Benetzbarkeit der Oberfläche aufgrund der Abnahme der Oberflächenenergie sogar ab.

Die Ursache könnte die Bildung von Mikrostrukturen aufgrund der Laserbehandlung sein.

## Patentansprüche

1. Verfahren zur Herstellung einer lasermarkierten Beschichtung auf einer Oberfläche oder einem Teil einer Oberfläche eines Gegenstandes, aufweisend:
a) Aufbringen einer wässrigen Zusammensetzung welche die folgenden Komponenten aufweist
A) ein kolloidales, amorphes Siliciumdioxid,
B) zumindest ein Alkoxysilan, das in der wässrigen Zusammensetzung ganz oder teilweise hydrolysiert sein kann,
und gegebenenfalls zusätzlich zu den Komponenten A) und B), oder anstelle der Komponenten A) und B), die Komponente
C) ein Reaktionsprodukt aus dem kolloidalen, amorphen Siliciumdioxid und dem hydrolysierten Alkoxysilan,
und als weitere Komponenten
D) eine Säure oder Base,
E) zumindest ein lasersensitives Pigment und/oder lasersensitives Färbemittel, das in der wässrigen Zusammensetzung suspendiert und/oder in dem Reaktionsprodukt C) verteilt ist,
oder welche erhältlich ist durch Vermischen von
- einem kolloidalen, amorphen Siliciumdioxid,
- zumindest einem Alkoxysilan,
- zumindest einem lasersensitiven Pigment und/oder lasersensitivem Färbemittel, und
- einer Säure oder Base
auf die zu beschichtende Oberfläche oder den zu beschichtenden Teil der Oberfläche,
b) Aushärten der aufgebrachten wässrigen Zusammensetzung unter Ausbildung einer Beschichtung, und weiterhin aufweisend:
- Bestrahlen der Beschichtung, zumindest abschnittsweise, mit einem Laserstrahl, sodass die Beschichtung lasermarkiert wird.

2. Verfahren nach Anspruch 1, wobei die wässrige Zusammensetzung folgende Anteile der Komponenten, bezogen auf die Gesamtmasse der wässrigen Zusammensetzung aufweist:
- kolloidales, amorphes Siliciumdioxid: 10 - 20 Gew.-%
- Alkoxysilan: 20 - 50 Gew.-%
- lasersensitives Pigment und/oder lasersensitives Färbemittel:
0,3 - 20 Gew.-%.

3. Verfahren nach einem der Ansprüche 1-2, wobei die wässrige Zusammensetzung als weitere Komponente zumindest ein Organopolysiloxan aufweist.

4. Verfahren nach einem der Ansprüche 1-3, wobei die wässrige Zusammensetzung einen pH-Wert im Bereich von 2,5 bis 5 aufweist.

5. Verfahren zur Herstellung einer lasermarkierten Beschichtung auf einer Oberfläche oder einem Teil einer Oberfläche eines Gegenstandes, aufweisend:
i) Aufbringen einer ersten wässrigen Zusammensetzung, aufweisend
1A) ein kolloidales, amorphes Siliciumdioxid,
1B) zumindest ein Alkoxysilan, dass in der wässrigen Zusammensetzung ganz oder teilweise hydrolysiert sein kann, und gegebenenfalls zusätzlich zu den Komponenten 1A) und 1B), oder anstelle der Komponenten 1A) und 1B) die Komponente
1C) ein Reaktionsprodukt aus dem kolloidalen, amorphen Siliciumdioxid und dem hydrolysierten Alkoxysilan,
und weiterhin
1D) eine Säure oder Base
F) eine Komponente, die ausgewählt ist aus einen Farbpigment, und/oder einem Abriebfestiger und/oder einem Antikorrosionsmittel,
auf eine zu beschichtende Oberfläche oder einen zu beschichtenden Teil der Oberfläche, sodass dort ein Film aus der ersten Zusammensetzung gebildet wird,
ii) Aufbringen einer zweiten wässrigen Zusammensetzung, aufweisend
2A) ein kolloidales, amorphes Siliciumdioxid,
2B) zumindest ein Alkoxysilan, das in der wässrigen Zusammensetzung ganz oder teilweise hydrolysiert sein kann,
und gegebenenfalls zusätzlich zu den Komponenten 2A) und 2B), oder anstelle der Komponenten 2A) und 2B) die Komponente
2C) ein Reaktionsprodukt aus dem kolloidalen, amorphen Siliciumdioxid und dem hydrolysierten Alkoxysilan,
und weiterhin
2D) eine Säure oder Base,
auf den Film aus der ersten Zusammensetzung,
wobei die erste wässrige Zusammensetzung und/oder die zweite wässrige Zusammensetzung als Komponente E) zumindest ein lasersensitives Pigment und/oder ein lasersensitives Färbemittel aufweisen, das in der jeweiligen wässrigen Zusammensetzung suspendiert ist,
iii) Aushärten der ersten und der zweiten wässrigen Zusammensetzung und Ausbildung einer Beschichtung,
wobei das Verfahren weiterhin aufweist:
- Bestrahlen der Beschichtung, zumindest abschnittsweise, mit einem Laserstrahl, sodass die Beschichtung lasermarkiert wird.

6. Verfahren nach einem der Ansprüche 1-5, wobei das Alkoxysilan eine Verbindung der allgemeinen chemischen Formel: 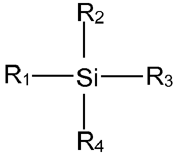 ist, wobei R₁, R₂, R₃ und R₄ unabhängig voneinander eine Alkylgruppe mit einer Kettenlänge in dem Bereich von C₁ bis C₁₂, eine Phenylgruppe oder eine Alkoxygruppe mit einer Kettenlänge im Bereich von C₁ bis C₄ sind, mit der Maßgabe, dass wenigstens zwei Reste von R₁, R₂, R₃ und R₄ Alkoxygruppen mit einer Kettenlänge im Bereich von C₁ bis C₄ sind.

7. Verfahren nach einem der Ansprüche 1-6, wobei das Alkoxysilan ein Alkyl-tri-alkoxysilan ist.

8. Verfahren nach einem der Ansprüche 1-7, wobei das zumindest eine lasersensitive Pigment und/oder lasersensitive Färbemittel ausgewählt ist aus einem Metalloxid, Metallhydroxid, Metallsulfid oder Metallphosphat, insbesondere der Metalle Kupfer, Bismuth, Zinn, Zink, Silber, Antimon, Mangan, Eisen, Nickel und Chrom, oder einer Mischung dieser.

9. Verfahren nach einem der Ansprüche 1-8, wobei die wässrige Zusammensetzung, oder wie wässrigen Zusammensetzungen, bei dem Aushärten erhitzt werden.

10. Beschichtung, die eine Lasermarkierung aufweist und die erhältlich ist nach einem Verfahren nach einem der Ansprüche 1-9.

11. Gegenstand, aufweisend eine Oberfläche, die wenigstens zum Teil mit einer Beschichtung nach Anspruch 10 beschichtet ist.

12. Gegenstand nach Anspruch 11, wobei die Oberfläche eine metallische, keramische oder glaskeramische Oberfläche ist.

## Claims

1. A method of producing a laser-marked coating on a surface or part of a surface of an object, comprising:
a) applying an aqueous composition comprising the following components
A) a colloidal, amorphous silicon dioxide,
B) at least one alkoxysilane which may be wholly or partially hydrolyzed in the aqueous composition,
and optionally in addition to components A) and B), or instead of components A) and B), component
C) a reaction product of the colloidal, amorphous silicon dioxide and the hydrolyzed alkoxysilane,
and as further components
D) an acid or base,
E) at least one laser-sensitive pigment and/or laser-sensitive colorant which is suspended in the aqueous composition and/or distributed in the reaction product C),
or which is obtainable by mixing
- a colloidal, amorphous silicon dioxide,
- at least one alkoxysilane,
- at least one laser-sensitive pigment and/or laser-sensitive colorant, and
- an acid or base
to the surface to be coated or the part of the surface to be coated,
b) curing the applied aqueous composition to form a coating,
and further comprising:
- irradiating the coating, at least in sections, with a laser beam so that the coating is laser-marked.

2. The method according to claim 1, wherein the aqueous composition has the following proportions of the components, based on the total mass of the aqueous composition:
- colloidal, amorphous silicon dioxide: 10 - 20 % by weight
- alkoxysilane: 20 - 50 % by weight
- laser-sensitive pigment and/or laser-sensitive colorant: 0.3 - 20% by weight.

3. The method according to any one of claims 1-2, wherein the aqueous composition comprises as a further component at least one organopolysiloxane.

4. The method according to one of claims 1-3, wherein the aqueous composition has a pH value in the range from 2.5 to 5.

5. A method of producing a laser-marked coating on a surface or part of a surface of an object, comprising:
i) applying a first aqueous composition comprising:
1A) a colloidal, amorphous silicon dioxide,
1B) at least one alkoxysilane which may be completely or partially hydrolyzed in the aqueous composition,
and optionally in addition to components 1A) and 1B), or instead of components 1A) and 1B), component
1C) a reaction product of the colloidal amorphous silicon dioxide and the hydrolyzed alkoxysilane, and furthermore
1D) an acid or base
F) a component selected from a color pigment, and/or an abrasion resistant agent and/or an anti-corrosive agent,
onto a surface to be coated or a part of the surface to be coated, so that a film of the first composition is formed there,
ii) applying of a second aqueous composition comprising
2A) a colloidal amorphous silicon dioxide,
2B) at least one alkoxysilane, which may be completely or partially hydrolyzed in the aqueous composition, and optionally, in addition to components 2A) and 2B), or instead of components 2A) and 2B), component
2C) a reaction product of the colloidal amorphous silicon dioxide and the hydrolyzed alkoxysilane, and furthermore
2D) an acid or base,
on the film from the first composition,
wherein the first aqueous composition and/or the second aqueous composition comprise as component E) at least one laser-sensitive pigment and/or a laser-sensitive colorant suspended in the respective aqueous composition,
iii) curing the first and second aqueous compositions and forming a coating, wherein the method further comprises
- irradiating the coating, at least in sections, with a laser beam so that the coating is laser-marked.

6. The method according to any one of claims 1-5, wherein the alkoxysilane is a compound of the general chemical formula: 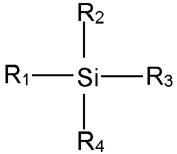 wherein R₁, R₂, R₃ and R₄ are, independently of one another, an alkyl group having a chain length in the range from C₁ to C₁₂, a phenyl group or an alkoxy group having a chain length in the range from C₁ to C₄, with the proviso that at least two radicals of R₁, R₂, R₃ and R₄ are alkoxy groups having a chain length in the range from C₁ to C₄.

7. The method according to any one of claims 1-6, wherein the alkoxysilane is an alkyl-tri-alkoxysilane.

8. The method according to any one of claims 1-7, wherein the at least one laser-sensitive pigment and/or laser-sensitive colorant is selected from a metal oxide, metal hydroxide, metal sulfide or metal phosphate, in particular of the metals copper, bismuth, tin, zinc, silver, antimony, manganese, iron, nickel and chromium, or a mixture thereof.

9. The method according to any one of claims 1-8, wherein the aqueous composition, or the aqueous compositions, are heated during curing.

10. A coating comprising a laser marking and obtainable by a method according to any one of claims 1-9.

11. An article comprising a surface coated at least in part with a coating according to claim 10.

12. The article according to claim 11, wherein the surface is a metallic, ceramic or glass-ceramic surface.

## Revendications

1. Procédé de production d'un revêtement marqué au laser sur une surface ou une partie d'une surface d'un objet, comprenant:
a) l'application d'une composition aqueuse comprenant les composants suivants
A) une silice amorphe colloïdale,
B) au moins un alcoxysilane qui peut être totalement ou partiellement hydrolysé dans la composition aqueuse,
et éventuellement, en plus des composants A) et B), ou à la place des composants A) et B), le composant
C) un produit de réaction de la silice amorphe colloïdale et de l'alcoxysilane hydrolysé,
et comme autres composants
D) un acide ou une base,
E) au moins un pigment sensible au laser et/ou un colorant sensible au laser, qui est en suspension dans la composition aqueuse et/ou est réparti dans le produit de réaction C),
ou qui peut être obtenue en mélangeant
- une silice amorphe colloïdale,
- d'au moins un alcoxysilane,
- d'au moins un pigment sensible au laser et/ou d'un colorant sensible au laser, et
- d'un acide ou d'une base
sur la surface à revêtir ou sur la partie de la surface à revêtir,
b) durcissement de la composition aqueuse appliquée pour former un revêtement,
et comprenant en outre :
- l'irradiation du revêtement, au moins par sections, avec un faisceau laser, de sorte que le revêtement soit marqué au laser.

2. Procédé selon la revendication 1, dans lequel la composition aqueuse présente les proportions suivantes de composants, par rapport à la masse totale de la composition aqueuse :
- silice amorphe colloïdale : 10 - 20 % en poids
- alcoxysilane : 20 - 50 % en poids
- pigment sensible au laser et/ou colorant sensible au laser: 0,3 - 20 % en poids.

3. Procédé selon l'une des revendications 1-2, dans lequel la composition aqueuse comprend comme autre composant au moins un organopolysiloxane.

4. Procédé selon l'une quelconque des revendications 1 à 3, dans lequel la composition aqueuse présente un pH compris entre 2,5 et 5.

5. Procédé de production d'un revêtement marqué au laser sur une surface ou une partie d'une surface d'un objet, comprenant :
i) l'application d'une première composition aqueuse comprenant
1A) une silice amorphe colloïdale,
1B) au moins un alcoxysilane qui peut être totalement ou partiellement hydrolysé dans la composition aqueuse,
et éventuellement, en plus des composants 1A) et 1B), ou à la place des composants 1A) et 1B), le composant
1C) un produit de réaction de la silice amorphe colloïdale et de l'alcoxysilane hydrolysé,
et en outre
1D) un acide ou une base
F) un composant choisi parmi un pigment coloré, et/ou un agent anti-abrasion et/ou un agent anticorrosion,
sur une surface ou une partie de la surface à revêtir, de manière à y former un film de la première composition,
ii) l'application d'une seconde composition aqueuse comprenant
2A) une silice amorphe colloïdale,
2B) au moins un alcoxysilane, qui peut être totalement ou partiellement hydrolysé dans la composition aqueuse,
et éventuellement, en plus des composants 2A) et 2B), ou à la place des composants 2A) et 2B), le composant
2C) un produit de réaction de la silice amorphe colloïdale et de l'alcoxysilane hydrolysé,
et en outre
2D) un acide ou une base,
sur le film de la première composition,
la première composition aqueuse et/ou la deuxième composition aqueuse comprenant, en tant que composant E), au moins un pigment sensible au laser et/ou un colorant sensible au laser, en suspension dans la composition aqueuse respective,
iii) durcir la première et la deuxième composition aqueuse et former un revêtement,
le procédé comprenant en outre :
- l'irradiation du revêtement, au moins par sections, avec un faisceau laser, de sorte que le revêtement soit marqué au laser.

6. Procédé selon l'une quelconque des revendications 1 à 5, dans lequel l'alcoxysilane est un composé de formule chimique générale : 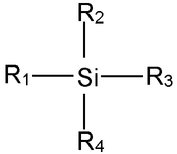 dans laquelle R₁, R₂, R₃ et R₄ sont indépendamment un groupe alkyle ayant une longueur de chaîne dans la plage de C₁ à C₁₂, un groupe phényle ou un groupe alcoxy ayant une longueur de chaîne dans la plage de C₁ à C₄, à condition qu'au moins deux de R₁, R₂, R₃ et R₄ soient des groupes alcoxy ayant une longueur de chaîne dans la plage de C₁ à C₄.

7. Procédé selon l'une quelconque des revendications 1 à 6, dans lequel l'alcoxysilane est un alkyl-tri-alcoxysilane.

8. Procédé selon l'une quelconque des revendications 1 à 7, dans lequel ledit au moins un pigment sensible au laser et/ou colorant sensible au laser est choisi parmi un oxyde métallique, un hydroxyde métallique, un sulfure métallique ou un phosphate métallique, notamment les métaux cuivre, bismuth, étain, zinc, argent, antimoine, manganèse, fer, nickel et chrome, ou un mélange de ceux-ci.

9. Procédé selon l'une quelconque des revendications 1 à 8, dans lequel la composition aqueuse, ou les compositions aqueuses, sont chauffées lors du durcissement.

10. Revêtement comportant un marquage laser, pouvant être obtenu par un procédé selon l'une quelconque des revendications 1 à 9.

11. Article présentant une surface dont au moins une partie est revêtue d'un revêtement selon la revendication 10.

12. Article selon la revendication 11, dans lequel la surface est une surface métallique, céramique ou vitrocéramique.
